# EUROPEAN PATENT APPLICATION

(11) **EP 4 738 046 A1**
(43) Date of publication of application: **06.05.2026**
(21) Application number: 25211510.0
(22) Date of filing: 27.10.2025
(51) Int. Cl.: G05D 16/20

(54) **PIEZOELECTRIC ACTUATOR CONTROLLED SMART FLOW REGULATOR FOR AIRCRAFT OXYGEN SYSTEMS**

(30) Priority: 29.10.2024 IN 202441082755; 01.08.2025 US 202519288123
(71) Applicant: B/E Aerospace, Inc., Winston-Salem, NC 27105 (US)
(72) Inventor: SELVARAJ, Sugumaran, 560067 Bangalore, Karnataka (IN); GOEKE, Ralf, 23566 Lübeck (DE)
(74) Representative: Dehns

(57) **Abstract**

A piezoelectric actuator controlled smart flow regulator (300) is provided. The piezoelectric actuator controlled smart flow regulator includes an inlet chamber (302) and an actuator chamber (304). The inlet chamber includes an inlet port (310). The actuator chamber includes an exit port (312), a sealing disc (316, 416), and at least one piezoelectric actuator (318). The at least one piezoelectric actuator is coupled to the sealing disc. In a deactivated state, the sealing disc is in contact with the inlet port such that oxygen is prevented from flowing through the actuator chamber. In an activated state, responsive to receiving a voltage, the at least one piezoelectric actuator is configured to restrict thereby translating a center of the sealing disc away from the inlet port and provide an oxygen flow through the inlet port to the exit port.

## Description

### CROSS-REFERENCE TO RELATED APPLICATIONS

This application claims priority to, and the benefit of, India Patent Application No. 202441082755, filed October 29, 2024 and titled "PIEZOELECTRIC ACTUATOR CONTROLLED SMART FLOW REGULATOR FOR AIRCRAFT OXYGEN SYSTEMS".

### FIELD

The present disclosure generally relates to aircraft oxygen systems, and more specifically, to a piezoelectric actuator controlled smart flow regulator for aircraft oxygen systems.

### BACKGROUND

Aircraft survival systems, such life support oxygen systems, use stored pressurized gas in pressurized cylinders. Oxygen filled portable cylinders are typically configured with a pressure regulator that divides the regulator outlet flow for distribution to multiple masks. Oxygen cylinders are installed to feed a distribution system via the pressure regulator and tubing. The passenger compartment typically has multiple breathing stations plumbed so each passenger is provided a mask for oxygen gas, responsive to oxygen gas being needed for survival. Oxygen gas is stored and transported in high pressure cylinders. Oxygen system design depends largely on the operational requirements. Oxygen systems may be continuous flow or a demand-based flow system.

### SUMMARY

A piezoelectric actuator controlled smart flow regulator is provided. The piezoelectric actuator controlled smart flow regulator includes an inlet chamber and an actuator chamber. The inlet chamber includes an inlet port. The actuator chamber includes an exit port, a sealing disc, and at least one piezoelectric actuator. The at least one piezoelectric actuator is coupled to the sealing disc. In a deactivated state, the sealing disc is in contact with the inlet port such that oxygen is prevented from flowing through the actuator chamber. In an activated state, responsive to receiving a voltage, the at least one piezoelectric actuator is configured to restrict thereby translating a center of the sealing disc away from the inlet port and provide an oxygen flow through the inlet port to the exit port.

In various embodiments, the piezoelectric actuator controlled smart flow regulator further includes a voltage supply. In various embodiments, the voltage supply is configured to provide the voltage to the at least one piezoelectric actuator.

In various embodiments, the piezoelectric actuator controlled smart flow regulator further includes a voltage controller. In various embodiments, the voltage controller is configured to provide a voltage signal to the voltage supply indicating an amount of voltage to supply to the at least one piezoelectric actuator based on at least a measured pressure.

In various embodiments, the piezoelectric actuator controlled smart flow regulator further includes an exit conduit. In various embodiments, the exit conduit is coupled to the exit port. In various embodiments, the piezoelectric actuator controlled smart flow regulator further includes a pressure sensor. In various embodiments, the pressure sensor is configured to measure a flow rate of the oxygen in the exit conduit coupled to the exit port and provide a pressure signal of the measured pressure to the voltage controller.

In various embodiments, the piezoelectric actuator controlled smart flow regulator further includes a temperature sensor. In various embodiments, the temperature sensor is configured to measure a temperature of the oxygen in the exit conduit to account for an altitude of an aircraft thereby forming a measured temperature and provide a temperature signal of the measured temperature to the voltage controller. In various embodiments, the voltage controller is configured to provide the voltage signal to the voltage supply indicating the amount of voltage to supply to the at least one piezoelectric actuator based on at least the measured pressure and the measured temperature.

In various embodiments, the sealing disc includes a first portion and a second portion. In various embodiments, the second portion is coupled to the first portion. In various embodiments, the second portion is configured to seal the sealing disc to the inlet port.

In various embodiments, the first portion is coupled to an inner circumference of the actuator chamber.

In various embodiments, at least one piezoelectric actuator is further coupled to an inner circumference of the actuator chamber.

In various embodiments, the at least one piezoelectric actuator includes a first end and a second end. In various embodiments, the first end of the at least one piezoelectric actuator is coupled to the sealing disc via a first coupling mechanism. In various embodiments, the second end of the at least one piezoelectric actuator is coupled to an opposing end of the actuator chamber via a second coupling mechanism.

In various embodiments, the at least one piezoelectric actuator a set of piezoelectric actuators. In various embodiments, the set of piezoelectric actuators includes a first end and a second end. In various embodiments, the first end of the set of piezoelectric actuators is coupled to the sealing disc via a first coupling mechanism. In various embodiments, the second end of the set of piezoelectric actuators is coupled to an opposing end of the actuator chamber via a second coupling mechanism.

Also disclosed is an aircraft. The aircraft includes a piezoelectric actuator controlled smart flow regulator.

The piezoelectric actuator controlled smart flow regulator includes an inlet chamber and an actuator chamber. The inlet chamber includes an inlet port. The actuator chamber includes an exit port, a sealing disc, and at least one piezoelectric actuator. The at least one piezoelectric actuator is coupled to the sealing disc. In a deactivated state, the sealing disc is in contact with the inlet port such that oxygen is prevented from flowing through the actuator chamber. In an activated state, responsive to receiving a voltage, the at least one piezoelectric actuator is configured to restrict thereby translating a center of the sealing disc away from the inlet port and provide an oxygen flow through the inlet port to the exit port.

In various embodiments, the piezoelectric actuator controlled smart flow regulator further includes a voltage supply. In various embodiments, the voltage supply is configured to provide the voltage to the at least one piezoelectric actuator.

In various embodiments, the piezoelectric actuator controlled smart flow regulator further includes a voltage controller. In various embodiments, the voltage controller is configured to provide a voltage signal to the voltage supply indicating an amount of voltage to supply to the at least one piezoelectric actuator based on at least a measured pressure.

In various embodiments, the piezoelectric actuator controlled smart flow regulator further includes an exit conduit. In various embodiments, the exit conduit is coupled to the exit port. In various embodiments, the piezoelectric actuator controlled smart flow regulator further includes a pressure sensor. In various embodiments, the pressure sensor is configured to measure a flow rate of the oxygen in the exit conduit coupled to the exit port and provide a pressure signal of the measured pressure to the voltage controller.

In various embodiments, the piezoelectric actuator controlled smart flow regulator further includes a temperature sensor. In various embodiments, the temperature sensor is configured to measure a temperature of the oxygen in the exit conduit to account for oxygen flow rate variation thereby forming a measured temperature and provide a temperature signal of the measured temperature to the voltage controller. In various embodiments, the voltage controller is configured to provide the voltage signal to the voltage supply indicating the amount of voltage to supply to the at least one piezoelectric actuator based on at least the measured pressure and the measured temperature.

In various embodiments, the sealing disc includes a first portion and a second portion. In various embodiments, the second portion is coupled to the first portion. In various embodiments, the second portion is configured to seal the sealing disc to the inlet port.

In various embodiments, the first portion is coupled to an inner circumference of the actuator chamber.

In various embodiments, at least one piezoelectric actuator is further coupled to an inner circumference of the actuator chamber.

In various embodiments, the at least one piezoelectric actuator includes a first end and a second end. In various embodiments, the first end of the at least one piezoelectric actuator is coupled to the sealing disc via a first coupling mechanism. In various embodiments, the second end of the at least one piezoelectric actuator is coupled to an opposing end of the actuator chamber via a second coupling mechanism.

In various embodiments, the at least one piezoelectric actuator a set of piezoelectric actuators. In various embodiments, the set of piezoelectric actuators includes a first end and a second end. In various embodiments, the first end of the set of piezoelectric actuators is coupled to the sealing disc via a first coupling mechanism. In various embodiments, the second end of the set of piezoelectric actuators is coupled to an opposing end of the actuator chamber via a second coupling mechanism.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates an aircraft and various sections within the aircraft, in accordance with various embodiments.
FIG. 1B illustrates a schematic longitudinal cross-sectional view of a section of a passenger cabin, in accordance with various embodiments.
FIG. 1C illustrates a schematic view of an overhead passenger service unit ("PSU"), in accordance with various embodiments.
FIG. 2 illustrates a diagram of a pressurized gas bottle coupled with multiple user masks and actuator system, in accordance with various embodiments.
FIGS. 3A and 3B illustrate a piezoelectric actuator controlled smart flow regulator, in accordance with various embodiments.
FIGS. 4A and 4B illustrate a piezoelectric actuator controlled smart flow regulator, in accordance with various embodiments.
FIGS. 5A and 5B illustrate a piezoelectric actuator controlled smart flow regulator is illustrated, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation.

As stated previously, typical aircraft survival systems, such life support oxygen systems, use stored pressurized gas in pressurized cylinders. Oxygen filled portable cylinders are typically configured with a pressure regulator that divides the regulator outlet flow for distribution to multiple masks. Oxygen cylinders are installed to feed a distribution system via the pressure regulator and tubing. The passenger compartment typically has multiple breathing stations plumbed so each passenger is provided a mask for oxygen gas, responsive to oxygen gas being needed for survival. Oxygen gas is stored and transported in high pressure cylinders. Oxygen system design depends largely on the operational requirements. Oxygen systems may be continuous flow or a demand flow system. In continuous flow oxygen systems, oxygen flow from the pressure reducing regulator is continuously fed into hoses attached to masks wom by the user. Even when the user is exhaling, preset flow of oxygen is continuous. In demand flow oxygen systems, oxygen is delivered only when there is a demand, i.e., when the user inhales. During the hold and exhalation periods of breathing, the oxygen supply is stopped. This way, the duration of the oxygen supply is prolonged as little to none is wasted. Demand flow is system is most frequently used now days. However, current regulator design utilizes a number of dynamic O ring seals, which needs period maintenance efforts. Typical presets for the outlet pressure for the nominal flow conditions is tuned by a spring load setting. Once the regulator is assembled with all preset nominal requirements and assembled to system, it operates in passive mode, responding to the fluid pressure drops in the feed system.

Disclosed herein is a system that utilizes a piezoelectric actuator controlled smart flow regulator for the aircraft oxygen systems. In various embodiments, the piezoelectric actuator controlled smart flow regulator controls the oxygen flow by accurate valve motion based on required flow rate with respect to sensor response. In various embodiments, the piezoelectric actuator controlled smart flow regulator includes an inlet chamber and an actuator chamber. In various embodiments, the actuator chamber includes one or more exit ports. In various embodiments, the actuator chamber includes a sealing disc, one or more piezoelectric actuators, a pressure sensor, a temperature sensor, a voltage controller, and a power source. In various embodiments, the actuator chamber includes a spring load mechanism for sealing disc retainment. In various embodiments, the sealing disc may be comprised of a metal, hyper elastic, or a combination of both, among others. In various embodiments, the one or more piezoelectric actuators are coupled to the sealing disc. In that regard, the one or more piezoelectric actuators are utilized to control the opening and closing of the sealing disc. In that regard, in various embodiments, for a given voltage, the one or more piezoelectric actuators translate the sealing disc to provide oxygen flow. In various embodiments, the voltage may be derived from required flow rate as per the demand. In various embodiments, the pressure sensor is configured to measure a flow rate. In various embodiments, the pressure sensor is configured to send a signal of the measured pressure to the voltage controller. In various embodiments, the temperature sensor is configured to provide a temperature signal of the temperature associated with the oxygen delivery system to the various masks that may be utilized by the pressure control to account for oxygen flow rate variation. In various embodiments, the voltage controller is configured to, based on the received pressure signal and temperature signal, provide a signal of an appropriate voltage to maintain a predetermined pressure to the power source. In turn, in various embodiments, the power source is configured to provide an appropriate voltage to the one or more piezoelectric actuators to control the opening and closing of the sealing disc to maintain the predetermined pressure. In various embodiments, the one or more piezoelectric actuators may be simple piezoelectric disc, patch, or multi-stack array that depends on a maximum displacement requirement of the sealing disc for a given design. In various embodiments, the power source may be a built-in battery source or an external voltage supply.

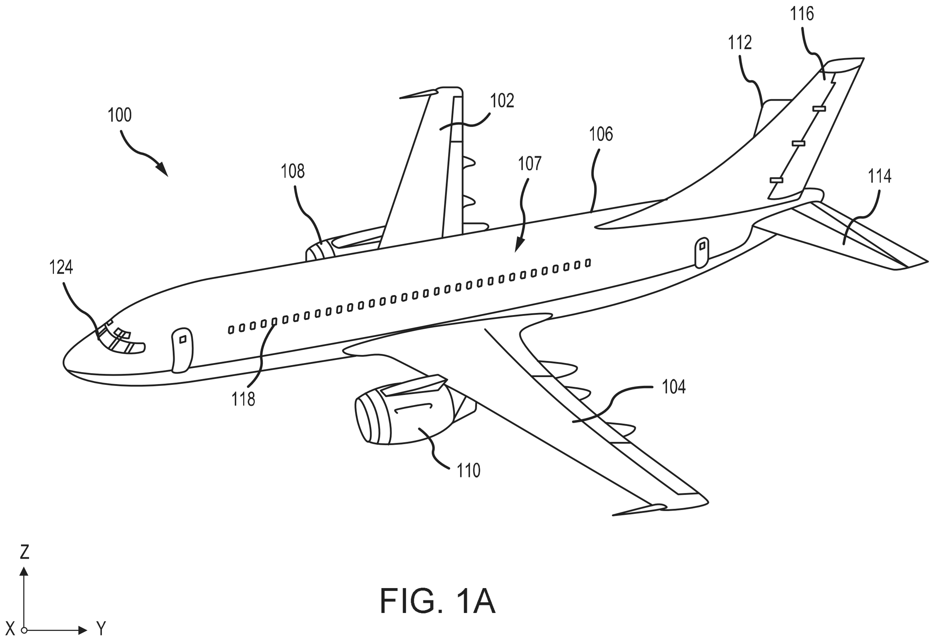

Referring now to FIG. 1A, an aircraft 100 and various sections within the aircraft is illustrated, in accordance with various embodiments. Aircraft 100 is an example of a passenger or transport vehicle in which a cooling system may be implemented in accordance with various embodiments. In various embodiments, aircraft 100 has a starboard wing 102 and a port wing 104 attached to a fuselage 106. In various embodiments, within the fuselage is a passenger cabin 107. In various embodiments, aircraft 100 also includes a starboard engine 108 connected to starboard wing 102 and a port engine 110 connected to port wing 104. In various embodiments, aircraft 100 also includes a starboard horizontal stabilizer 112, a port horizontal stabilizer 114, and a vertical stabilizer 116. In various embodiments, aircraft 100 also includes aircraft windows 118. In various embodiments, aircraft 100 also includes cockpit 124.

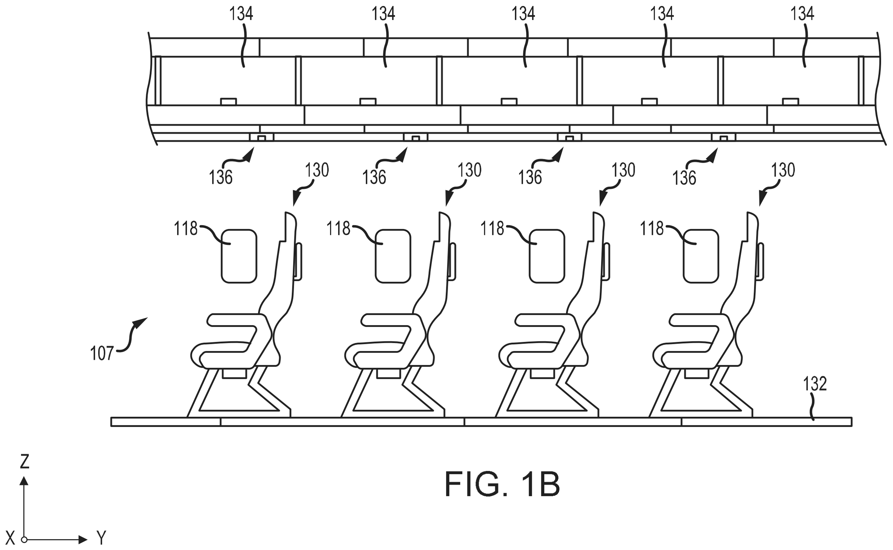

Referring now to FIG. 1B, in accordance with various embodiments, a schematic longitudinal cross-sectional view of a section of the passenger cabin 107 of the aircraft 100 of FIG. 1A is illustrated. In FIG. 1B, four passenger seats 130 are shown. In various embodiments, the passenger seats 130 are mounted to a floor 132 of the passenger cabin 107. Each of the passenger seats 130 depicted belong to a different seat row. For each of the seat rows, an aircraft window 118 is provided, which allows the passengers to view outside of the aircraft 100. Further, a plurality of overhead baggage compartments 134 are shown. The overhead baggage compartments 134 provide storage space for the passengers' baggage. Each seat row includes a plurality, for example two or three, passenger seats 130, which are arranged next to each other, perpendicular to the viewing plane of FIG. 1B. The additional passenger seats 130 of each seat row are not visible in FIG. 1B, as they are arranged behind and therefore hidden by the depicted first passenger seats (aisle seats) 130 of each seat row. Passenger service units ("PSUs") 136 comprises aircraft passenger reading lights, gaspers, switches, a movable door 146, which covers a compartment housing that houses oxygen masks, a grid that covers a speaker used for delivering acoustic announcements to the passengers, and a display panel, among other components.

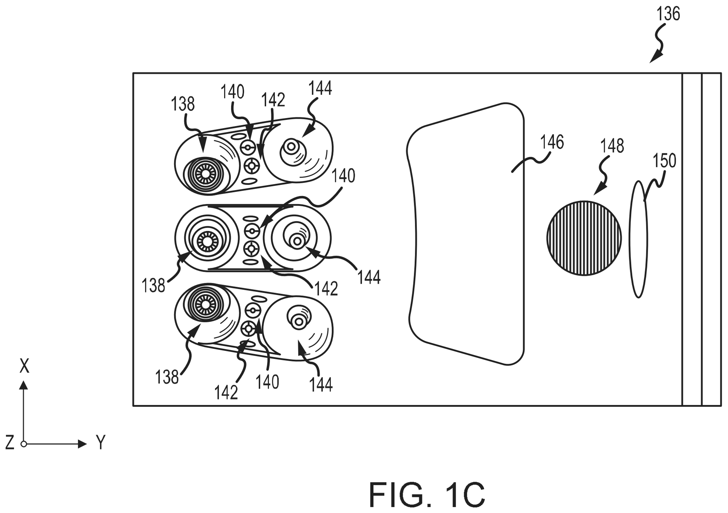

Referring now to FIG. 1C, in accordance with various embodiments, a schematic view of an overhead passenger service unit ("PSU") 136, which may be arranged above the passenger seats 130 of a single seat row, as illustrated in FIG. 1B, is illustrated. FIG. 1C illustrates the passenger service unit 136, as seen by a passenger sitting in a passenger seat 130 below the passenger service unit 136. In various embodiments, on the side that is shown to the left in FIG. 1C, the passenger service unit 136 includes a row of three adjustable aircraft passenger reading lights 138 arranged next to each other. In various embodiments, six electrical switches 140, 142 are provided to the right side of the aircraft passenger reading lights 138, a respective pair of two switches 140, 142 next to each of the aircraft passenger reading lights 138. A first one of the switches 142 of each pair is configured for switching the adjacent aircraft passenger reading light 138 on and off, and the second switch 140 of each pair is configured for triggering a signal for calling a crew member.

A row of three adjacent gaspers 144 is provided next to the switches 140, 142. Adjacent to the gaspers 144, is a movable door 146, which covers a compartment housing, for example, three oxygen masks. The compartment and the oxygen masks are not visible in FIG. 1C, as they are covered by the movable door 146. In the event of pressure loss within the passenger cabin 107, the movable door 146 will open, allowing the oxygen masks to drop out the compartment. Each of the passengers sitting in a passenger seat 130 below the passenger service unit 136 may grasp one of the oxygen masks. After being activated, an oxygen generator, which is not shown in the figures, will supply the oxygen masks with oxygen.

On the side opposite to the movable door 146, a grid 148 is formed within the passenger service unit 136. A loudspeaker, which may be used for delivering acoustic announcements to the passengers, may be arranged behind the grid 148. Next to the grid 148, is a display panel 150, which may be configured for selectively showing a plurality of visual signs, such as "no-smoking" or "fasten your seat belt". The display panel 150 may be illuminated from behind, in order to deliver visual information to the passengers sitting on the passenger seats 130 below the passenger service unit 136.

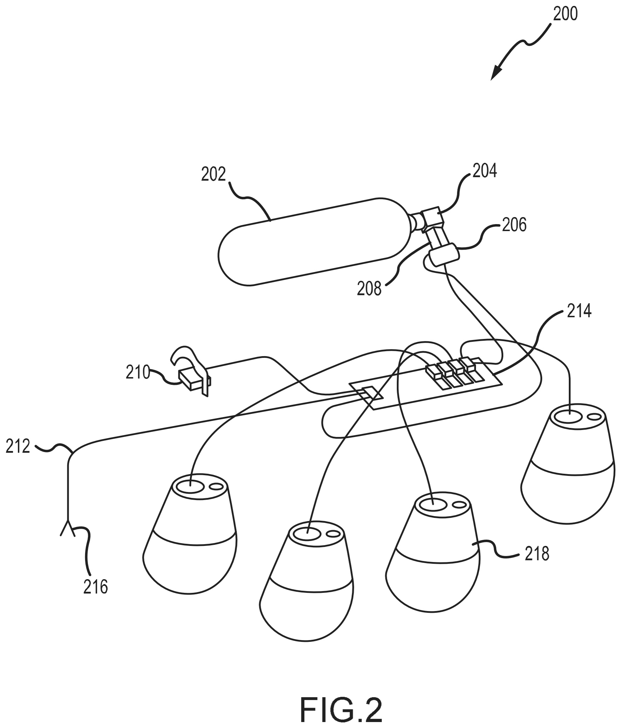

Referring now to FIG. 2, in accordance with various embodiments, a demand flow system 200 is illustrated. The demand flow system 200 includes an oxygen gas storage cylinder 202 of a high-pressure module assembly having a high-pressure manifold 204, a regulator 206, a pyrotechnic initiator 208, a latch 210, a power converter 212, controller 214, aircraft electrical power connection 216, and a set of passenger oxygen masks 218. In the demand flow system 200, oxygen is delivered only when the user inhales or on demand. During the hold and exhalation periods of breathing, the oxygen supply is stopped. In this way, the duration of the oxygen supply is prolonged as little to none is wasted.

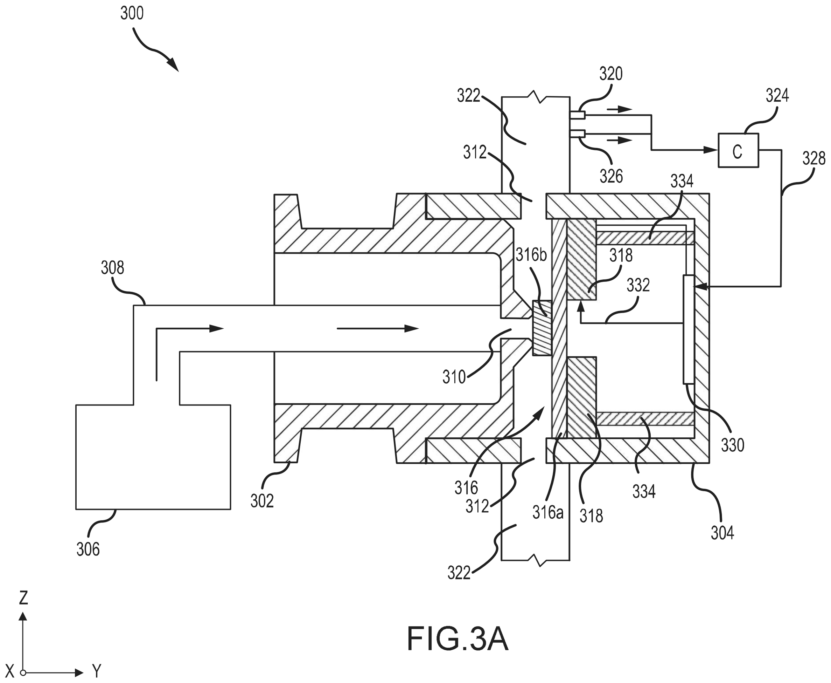

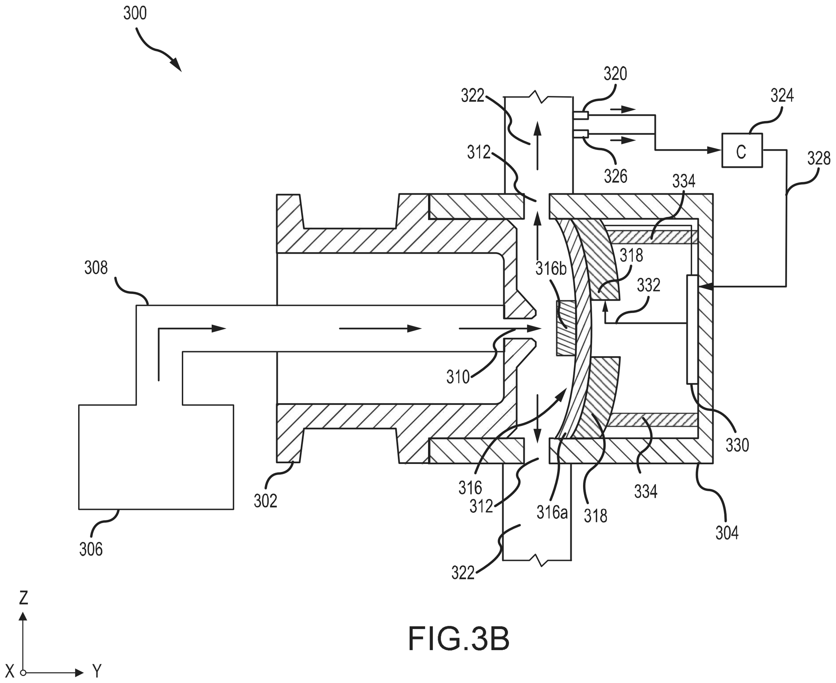

Referring now to FIGS. 3A and 3B, in accordance with various embodiments, a piezoelectric actuator controlled smart flow regulator is illustrated. In various embodiments, the piezoelectric actuator controlled smart flow regulator 300, which may be a regulator, such as regulator 206 of FIG. 2, includes an inlet chamber 302 and an actuator chamber 304. In various embodiments, the inlet chamber 302 is fluidly coupled to an oxygen gas storage cylinder 306 via a conduit 308. In various embodiments, oxygen gas flows from the oxygen gas storage cylinder 306 flows through the inlet chamber 302 to inlet port 310. In various embodiments, in a deactivated state, the oxygen gas is prevented from flowing past the inlet port 310 to exit ports 312 due to components, i.e., a sealing disc 316, within the actuator chamber 304. In various embodiments, the actuator chamber 304 comprises a sealing disc 316 and one or more piezoelectric actuators 318. In various embodiments, the sealing disc 316 may comprise a first portion 316a and a second portion 316b. In various embodiments, the first portion 316a of the sealing disc 316 may be comprised of a metal, a hyper elastic material, or a combination of both, among others. In that regard, the sealing disc 316 may be composed of a material, such as metal, foam, or rubber, among others, that may be exposed to large deformations and still remain fully elastic. In various embodiments, the first portion 316a is coupled to an inner circumference of the actuator chamber 304. In various embodiments, a composition of the first portion 316a provides for temporary deformation of the first portion 316a by the one or more piezoelectric actuators 318. In various embodiments, the second portion 316b of the sealing disc 316 may be comprised of an elastomer or polymeric material, such as natural rubber, silicone, polyisoprene, polytetrafluoroethylene (PTFE), nylon, polyethylene, or polypropylene, among others. In various embodiments, a composition of the second portion 316b provides for sealing of the second portion to the inlet port 310.

In various embodiments, a pressure sensor 320, which is coupled to exit conduit 322 that delivers oxygen to a set of passenger oxygen masks, such as a set of passenger oxygen masks 218 of FIG. 2, is configured to measure a flow rate of the oxygen in the exit conduit 322. In that regard, in various embodiments, the pressure sensor 320 is configured to provide a pressure signal of the measured pressure to a voltage controller 324. In various embodiments, a temperature sensor 326 is configured to measure a temperature of the oxygen in the exit conduit 322 to account for oxygen flow rate variation due to temperature of the oxygen in the exit conduit 322, i.e., an oxygen temperature above a predetermined temperature value may require a sealing disc 316 opening that is less than a temperature below the predetermined value. In that regard, in various embodiments, the temperature sensor 326 is configured to provide a temperature signal of the measured pressure to a voltage controller 324. Responsive to the received pressure signal and temperature signal, in various embodiments, the voltage controller 324 is configured to provide a voltage signal 328 of an appropriate voltage to maintain a predetermined pressure to the power source 330. Responsive to receiving the voltage signal 328, in various embodiments, the power source 330 is configured to provide a voltage 332 to the one or more piezoelectric actuators 318 to control the opening and closing of the sealing disc 316 to maintain a predetermined pressure within the exit conduit 322. In that regard, in various embodiments, the one or more piezoelectric actuators 318 are coupled to the first portion 316a of the sealing disc 316 as well as inner circumference of the actuator chamber 304. In various embodiments, responsive to receiving the voltage 332, the one or more piezoelectric actuators 318 constrict so as to extend outward towards the inner circumference of the actuator chamber 304 and thereby deform the sealing disc 316 such that a center of the sealing disc 316 translates, in a positive y-direction, away from the inlet port 310, as is illustrated in FIG. 3B. In that regard, in various embodiments, for a given voltage as signaled by the voltage controller 324, in an activated state, the one or more piezoelectric actuators 318 translates the center of the sealing disc 316 away, in a y-direction, from the inlet port 310 to provide oxygen flow through the inlet port 310 and out of the exit ports 312. Accordingly, in various embodiments, the one or more piezoelectric actuators 318 are utilized to control the opening and closing of the sealing disc 316. In various embodiments, the voltage 332 may be derived by the voltage controller 324 from required flow rate as per the demand. In various embodiments, the one or more piezoelectric actuators 318 may be simple piezoelectric disc, patch, or multi-stack array that depends on a maximum or near maximum displacement specification of the sealing disc for a given design. In various embodiments, the power source 330 may be a built-in battery source or an external voltage supply. In various embodiments, springs 334 may be located between the first portion of the sealing disc 316 and the opposing wall of the actuator chamber 304 and configured for retainment of the sealing disc 316.

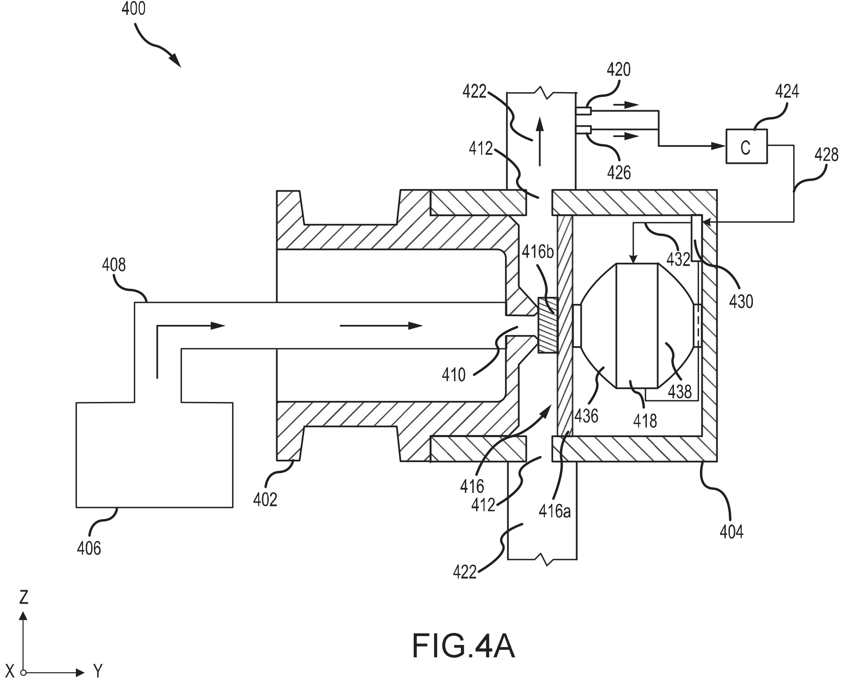

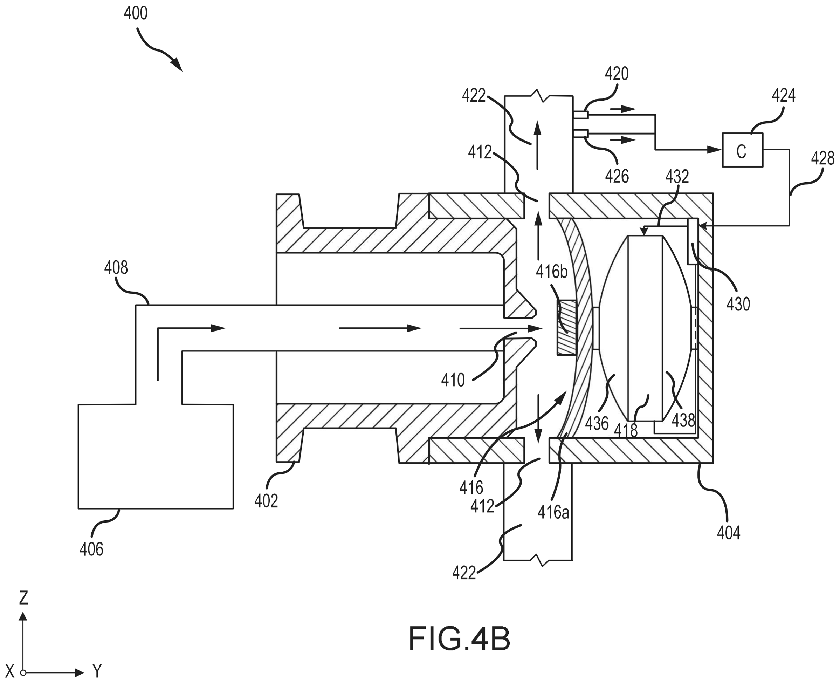

Referring now to FIGS. 4A and 4B, in accordance with various embodiments, a piezoelectric actuator controlled smart flow regulator is illustrated. In various embodiments, the piezoelectric actuator controlled smart flow regulator 400, which may be a regulator, such as regulator 206 of FIG. 2, includes an inlet chamber 402 and an actuator chamber 404. In various embodiments, the inlet chamber 402 is fluidly coupled to an oxygen gas storage cylinder 406 via a conduit 408. In various embodiments, oxygen gas flows from the oxygen gas storage cylinder 406 flows through the inlet chamber 402 to inlet port 410. In various embodiments, in a deactivated state, the oxygen gas is prevented from flowing past the inlet port 410 to exit ports 412 due to components, i.e., a sealing disc 416, within the actuator chamber 404. In various embodiments, the actuator chamber 404 comprises a sealing disc 416 and one or more piezoelectric actuators 418. In various embodiments, the sealing disc 416 may comprise a first portion 416a and a second portion 416b. In various embodiments, the first portion 416a of the sealing disc 416 may be comprised of a metal, a hyper elastic material, or a combination of both, among others. In that regard, the sealing disc 316 may be composed of a material, such as metal, foam, or rubber, among others, that may be exposed to large deformations and still remain fully elastic. In various embodiments, a composition of the first portion 416a provides for temporary deformation of the first portion 416a by the one or more piezoelectric actuators 418. In various embodiments, the second portion 416b of the sealing disc 416 may be comprised of an elastomer or polymeric material, such as natural rubber, silicone, polyisoprene, polytetrafluoroethylene (PTFE), nylon, polyethylene, or polypropylene, among others. In various embodiments, a composition of the second portion 416b provides for sealing of the second portion to the inlet port 410.

In various embodiments, a pressure sensor 420, which is coupled to exit conduit 422 that delivers oxygen to a set of passenger oxygen masks, such as a set of passenger oxygen masks 218 of FIG. 2, is configured to measure a flow rate of the oxygen in the exit conduit 422. In that regard, in various embodiments, the pressure sensor 420 is configured to provide a pressure signal of the measured pressure to a voltage controller 424. In various embodiments, a temperature sensor 426 is configured to measure a temperature of the oxygen in the exit conduit 422 to account for oxygen flow rate variation due to temperature of the oxygen in the exit conduit 422, i.e., an oxygen temperature above a predetermined temperature value may require a sealing disc 416 opening that is less than a temperature below the predetermined value. In that regard, in various embodiments, the temperature sensor 426 is configured to provide a temperature signal of the measured pressure to a voltage controller 424. Responsive to the received pressure signal and temperature signal, in various embodiments, the voltage controller 424 is configured to provide a voltage signal 428 of an appropriate voltage to maintain a predetermined pressure to the power source 430. Responsive to receiving the voltage signal 428, in various embodiments, the power source 430 is configured to provide a voltage 432 to the one or more piezoelectric actuators 418 to control the opening and closing of the sealing disc 416 to maintain a predetermined pressure within the exit conduit 422. In that regard, in various embodiments, a first end of the one or more piezoelectric actuators 418 is coupled to the first portion 416a of the sealing disc 416 via a first coupling mechanism 436. In various embodiments, the first coupling mechanism 436 may be a mechanical amplification mechanism/extension that may be connected to the sealing disc 416 via a bolt and nut or an adhesive, among others. In various embodiments, a second end of the one or more piezoelectric actuators 418 are coupled an opposing end, in the y-direction, of the of the actuator chamber 404 via a second coupling mechanism 438. In various embodiments, the second coupling mechanism 438 may be a mechanical amplification mechanism/extension that may be connected to the actuator chamber 404 via a bolt and nut or an adhesive, among others. In various embodiments, responsive to receiving the voltage 432, the one or more piezoelectric actuators 418 translate outward, in a positive and negative z-direction, thereby translating, in a positive y-direction, the center of the sealing disc 416 away from the inlet port 410, as is illustrated in FIG. 4B. In that regard, in various embodiments, for a given voltage, as signaled by the voltage controller 424, in an activated state, the one or more piezoelectric actuators 418 translate the sealing disc 416 away, in a y-direction, from the inlet port 410 to provide oxygen flow through the inlet port 410 and out of the exit ports 412. Accordingly, in various embodiments, the one or more piezoelectric actuators 418 are utilized to control the opening and closing of the sealing disc 416. In various embodiments, the voltage 432 may be derived by the voltage controller 424 from required flow rate as per the demand. In various embodiments, the one or more piezoelectric actuators 418 may be simple piezoelectric disc, patch, or multi-stack array that depends on a maximum displacement requirement of the sealing disc for a given design. In various embodiments, the power source 430 may be a built-in battery source or an external voltage supply.

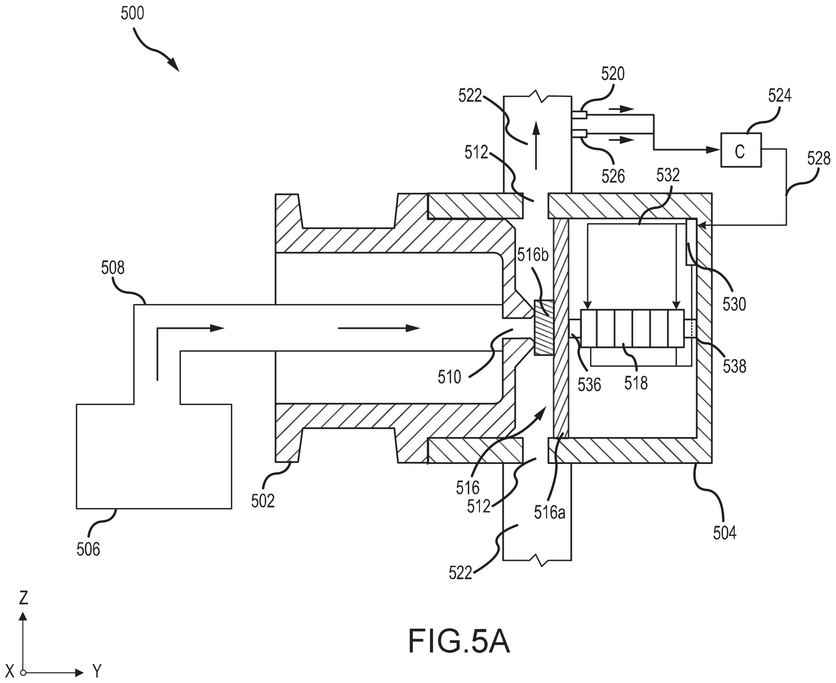

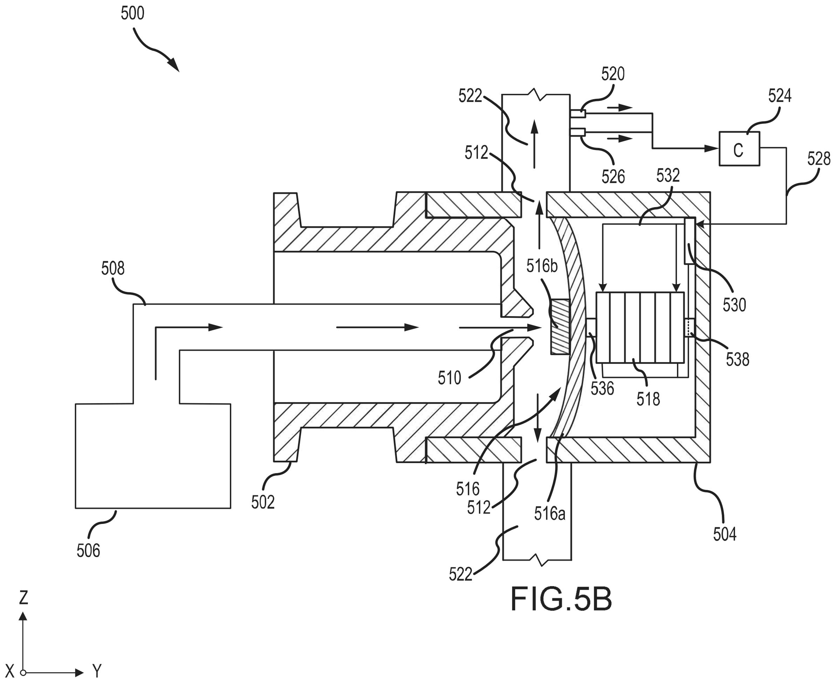

Referring now to FIGS. 5A and 5B, in accordance with various embodiments, a piezoelectric actuator controlled smart flow regulator is illustrated. In various embodiments, the piezoelectric actuator controlled smart flow regulator 500, which may be a regulator, such as regulator 206 of FIG. 2, includes an inlet chamber 502 and an actuator chamber 504. In various embodiments, the inlet chamber 502 is fluidly coupled to an oxygen gas storage cylinder 506 via a conduit 508. In various embodiments, oxygen gas flows from the oxygen gas storage cylinder 506 flows through the inlet chamber 502 to inlet port 510. In various embodiments, in a deactivated state, the oxygen gas is prevented from flowing past the inlet port 510 to exit ports 512 due to components, i.e., a sealing disc 516, within the actuator chamber 504. In various embodiments, the actuator chamber 504 comprises a sealing disc 516 and one or more piezoelectric actuators 518. In various embodiments, the sealing disc 516 may comprise a first portion 516a and a second portion 516b. In various embodiments, the first portion 516a of the sealing disc 516 may be comprised of a metal, a hyper elastic material, or a combination of both, among others. In that regard, the sealing disc 316 may be composed of a material, such as metal, foam, or rubber, among others, that may be exposed to large deformations and still remain fully elastic. In various embodiments, a composition of the first portion 516a provides for temporary deformation of the first portion 516a by the one or more piezoelectric actuators 518. In various embodiments, the second portion 516b of the sealing disc 516 may be comprised of an elastomer or polymeric material, such as natural rubber, silicone, polyisoprene, polytetrafluoroethylene (PTFE), nylon, polyethylene, or polypropylene, among others. In various embodiments, a composition of the second portion 516b provides for sealing of the second portion to the inlet port 510.

In various embodiments, a pressure sensor 520, which is coupled to exit conduit 522 that delivers oxygen to a set of passenger oxygen masks, such as a set of passenger oxygen masks 218 of FIG. 2, is configured to measure a flow rate of the oxygen in the exit conduit 522. In that regard, in various embodiments, the pressure sensor 520 is configured to provide a pressure signal of the measured pressure to a voltage controller 524. In various embodiments, a temperature sensor 526 is configured to measure a temperature of the oxygen in the exit conduit 522 to account for oxygen flow rate variation due to temperature of the oxygen in the exit conduit 522, i.e., an oxygen temperature above a predetermined temperature value may require a sealing disc 516 opening that is less than a temperature below the predetermined value. In that regard, in various embodiments, the temperature sensor 526 is configured to provide a temperature signal of the measured pressure to a voltage controller 524. Responsive to the received pressure signal and temperature signal, in various embodiments, the voltage controller 524 is configured to provide a voltage signal 528 of an appropriate voltage to maintain a predetermined pressure to the power source 530. Responsive to receiving the voltage signal 528, in various embodiments, the power source 530 is configured to provide a voltage 532 to the one or more piezoelectric actuators 518 to control the opening and closing of the sealing disc 516 to maintain a predetermined pressure within the exit conduit 522. In that regard, in various embodiments, a first end of the one or more piezoelectric actuators 518 are coupled to the first portion 516a of the sealing disc 516 via a first coupling mechanism 536. In various embodiments, the first coupling mechanism 536 may be a mechanical amplification mechanism/extension that may be connected to the sealing disc 516 via a bolt and nut or an adhesive, among others. In various embodiments, a second end of the one or more piezoelectric actuators 518 are coupled an opposing end, in the y-direction, of the of the actuator chamber 504 via a second coupling mechanism 538. In various embodiments, the second coupling mechanism 538 may be a mechanical amplification mechanism/extension that may be connected to the actuator chamber 504 via a bolt and nut or an adhesive, among others. In various embodiments, responsive to receiving the voltage 532, the one or more piezoelectric actuators 518 extend outward, in a positive and negative z-direction, thereby translating, in a positive y-direction, the center of the sealing disc 516 away from the inlet port 510, as is illustrated in FIG. 5B. In that regard, in various embodiments, for a given voltage as signaled by the voltage controller 524, in an activated state, the one or more piezoelectric actuators 518 translating the sealing disc 516, in the y-direction, away from the inlet port 510 to provide oxygen flow through the inlet port 510 and out of the exit ports 512. Accordingly, in various embodiments, the one or more piezoelectric actuators 518 are utilized to control the opening and closing of the sealing disc 516. In various embodiments, the voltage 532 may be derived by the voltage controller 524 from required flow rate as per the demand. In various embodiments, the one or more piezoelectric actuators 518 may be simple piezoelectric disc, patch, or multi-stack array that depends on a maximum displacement requirement of the sealing disc for a given design. In various embodiments, the power source 530 may be a built-in battery source or an external voltage supply.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A piezoelectric actuator controlled smart flow regulator (300), the piezoelectric actuator controlled smart flow regulator comprising:
an inlet chamber (302) comprising:
an inlet port (310); and
an actuator chamber (304) comprising:
an exit port (312);
a sealing disc (316, 416), wherein, in a deactivated state, the sealing disc is in contact with the inlet port such that oxygen is prevented from flowing through the actuator chamber; and
at least one piezoelectric actuator (318) coupled to the sealing disc, wherein, in an activated state, responsive to receiving a voltage, the at least one piezoelectric actuator is configured to restrict thereby translating a center of the sealing disc away from the inlet port and provide an oxygen flow through the inlet port to the exit port.

2. The piezoelectric actuator controlled smart flow regulator of claim 1, further comprising:
a voltage supply (330), wherein the voltage supply is configured to provide the voltage to the at least one piezoelectric actuator (318).

3. The piezoelectric actuator controlled smart flow regulator of claim 2, further comprising:
a voltage controller (324), wherein the voltage controller is configured to provide a voltage signal to the voltage supply (330) indicating an amount of voltage to supply to the at least one piezoelectric actuator (318) based on at least a measured pressure.

4. The piezoelectric actuator controlled smart flow regulator of claim 3, further comprising:
an exit conduit (322), the exit conduit coupled to the exit port (312); and
a pressure sensor (420), wherein the pressure sensor is configured to:
measure a flow rate of the oxygen in the exit conduit coupled to the exit port; and
provide a pressure signal of the measured pressure to the voltage controller (324).

5. The piezoelectric actuator controlled smart flow regulator of claim 4, further comprising:
a temperature sensor (426), wherein the temperature sensor is configured to:
measure a temperature of the oxygen in the exit conduit (322) to account for oxygen flow rate variation thereby forming a measured temperature; and
provide a temperature signal of the measured temperature to the voltage controller (324); and
wherein the voltage controller is configured to provide the voltage signal to the voltage supply (330) indicating the amount of voltage to supply to the at least one piezoelectric actuator (318) based on at least the measured pressure and the measured temperature.

6. The piezoelectric actuator controlled smart flow regulator of any preceding claim, wherein the sealing disc (316, 416) comprises:
a first portion (416a); and
a second portion (416b),
wherein the second portion is coupled to the first portion,
wherein the second portion is configured to seal the sealing disc to the inlet port (310, 410); and optionally wherein the first portion is coupled to an inner circumference of the actuator chamber (304).

7. The piezoelectric actuator controlled smart flow regulator of any preceding claim, wherein the at least one piezoelectric actuator (318) is further coupled to an inner circumference of the actuator chamber (304) and/or wherein the at least one piezoelectric actuator (318) includes a first end and a second end, wherein the first end of the at least one piezoelectric actuator is coupled to the sealing disc (316) via a first coupling mechanism (436), and wherein the second end of the at least one piezoelectric actuator is coupled to an opposing end of the actuator chamber (304) via a second coupling mechanism (438).

8. The piezoelectric actuator controlled smart flow regulator of any preceding claim, wherein the at least one piezoelectric actuator (318) a set of piezoelectric actuators, wherein the set of piezoelectric actuators includes a first end and a second end, wherein the first end of the set of piezoelectric actuators is coupled to the sealing disc (316, 416) via a first coupling mechanism (436), and wherein the second end of the set of piezoelectric actuators is coupled to an opposing end of the actuator chamber (304) via a second coupling mechanism (438).

9. An aircraft (100), the aircraft comprising:
a piezoelectric actuator controlled smart flow regulator (300), the piezoelectric actuator controlled smart flow regulator comprising:
an inlet chamber (302) comprising:
an inlet port (310); and
an actuator chamber (304) comprising:
an exit port (312);
a sealing disc (316, 416), wherein, in a deactivated state, the sealing disc is in contact with the inlet port such that oxygen is prevented from flowing through the actuator chamber; and
at least one piezoelectric actuator (318) coupled to the sealing disc, wherein, in an activated state, responsive to receiving a voltage, the at least one piezoelectric actuator is configured to restrict thereby translating a center of the sealing disc away from the inlet port and provide an oxygen flow through the inlet port to the exit port.

10. The aircraft of claim 9, wherein the piezoelectric actuator controlled smart flow regulator (300) further comprises:
a voltage supply (330), wherein the voltage supply is configured to provide the voltage to the at least one piezoelectric actuator (318).

11. The aircraft of claim 10, wherein the piezoelectric actuator controlled smart flow regulator (300) further comprises:
a voltage controller (324), wherein the voltage controller is configured to provide a voltage signal to the voltage supply (330) indicating an amount of voltage to supply to the at least one piezoelectric actuator (318) based on at least a measured pressure.

12. The aircraft of claim 11, wherein the piezoelectric actuator controlled smart flow regulator (300) further comprises:
an exit conduit (322), the exit conduit coupled to the exit port (312); and
a pressure sensor (420), wherein the pressure sensor is configured to:
measure a flow rate of the oxygen in the exit conduit coupled to the exit port; and provide a pressure signal of the measured pressure to the voltage controller (324); and wherein the piezoelectric actuator controlled smart flow regulator optionally further comprises:
a temperature sensor (426), wherein the temperature sensor is configured to:
measure a temperature of the oxygen in the exit conduit (322) to account for oxygen flow rate variation thereby forming a measured temperature; and
provide a temperature signal of the measured temperature to the voltage controller; and
wherein the voltage controller (324) is configured to provide the voltage signal to the voltage supply indicating the amount of voltage to supply to the at least one piezoelectric actuator based on at least the measured pressure and the measured temperature.

13. The aircraft of any of claims 9 to 12, wherein the sealing disc (316, 416) comprises:
a first portion (416a); and
a second portion (416b),
wherein the second portion is coupled to the first portion,
wherein the second portion is configured to seal the sealing disc (316, 416) to the inlet port (310, 410); and optionally wherein the first portion is coupled to an inner circumference of the actuator chamber (304).

14. The aircraft of any of claims 9 to 13, wherein the at least one piezoelectric actuator (300) is further coupled to an inner circumference of the actuator chamber (304); and/or wherein the at least one piezoelectric actuator includes a first end and a second end, wherein the first end of the at least one piezoelectric actuator is coupled to the sealing disc (316, 416) via a first coupling mechanism (436), and wherein the second end of the at least one piezoelectric actuator is coupled to an opposing end of the actuator chamber via a second coupling mechanism (438).

15. The aircraft of any of claims claim 9 to 14, wherein the at least one piezoelectric actuator (318) a set of piezoelectric actuators, wherein the set of piezoelectric actuators includes a first end and a second end, wherein the first end of the set of piezoelectric actuators is coupled to the sealing disc (316, 416) via a first coupling mechanism (436), and wherein the second end of the set of piezoelectric actuators is coupled to an opposing end of the actuator chamber (304) via a second coupling mechanism (438).
